# EUROPÄISCHE PATENTSCHRIFT

(11) **EP 1 628 436 B1**
(45) Veröffentlichungstag und Bekanntmachung des Hinweises auf die Patenterteilung: **03.01.2007**
(21) Anmeldenummer: 04019883.0
(22) Anmeldetag: 21.08.2004
(51) Int. Cl.: H04L 12/28, H04L 29/08

(54) **Vorrichtung zur Steuerung von insbesondere Sonnenschutzsystemen, Lichtsystemen, Schliesssystemen und Klimasystemen**
Apparatus for control in particular of sun shading systems, lighting systems, locking systems and air conditioning systems
Dispositif pour contrôler en particulier des écrans solaires, des systèmes l'éclairage, des systèmes de verrouillage et des systèmes de conditionnement

(43) Veröffentlichungstag der Anmeldung: 22.02.2006
(73) Patentinhaber: Gross, Beatrix, Dipl.-Ing., 70469 Stuttgart (DE)
(72) Erfinder: Gross, Beatrix, 70469 Stuttgart (DE)
(74) Vertreter: Kohler Schmid Möbus

(56) Entgegenhaltungen:
- EP-A- 1 317 099
- WO-A-01/86879
- DE-A1- 10 315 831

## Beschreibung

Die Erfindung betrifft eine Vorrichtung zur Steuerung von Gebäudetechniksystemen, insbesondere Sonnenschutzsystemen, Lichtsystemen, Schließsystemen und/oder Klimasystemen.

Ein Verfahren zur Steuerung von Sonnenschutzsystemen ist z.B. durch die EP 1 054 134 bekannt geworden. Bei dem Verfahren sind die Sonnenschutzsysteme mit motorischen Antriebseinheiten verbunden, die in einem ersten, lokalen Kommunikationsnetz über eine zentrale elektronische Steuereinheit gesteuert werden. Die Verwendung von Sensoren in der Nähe der Sonnenschutzsysteme soll durch Verwendung eines Informationsservers vermieden werden, der über ein zweites, nichtlokales Kommunikationsnetz, z.B. das Internet, mit der zentralen elektronischen Steuereinheit in Verbindung steht. Der Informationsserver ist insbesondere eine Wetterstation, welche in der Umgebung der Wohnung eintretende Wetterveränderungen feststellt. Die Wetterdaten werden zur Aktualisierung einer Datenbank der elektronischen Steuereinheit verwendet.

Aus der EP 0 687 794 ist ein elektronisches Fernsteuergerät zur Steuerung mehrerer motorischer Antriebseinheiten bekannt. Die motorischen Antriebseinheiten können unabhängig von dem Fernsteuergerät mit Bedienungselementen manuell gesteuert werden. Das elektronische Fernsteuergerät ist fest im Gebäude installiert oder kann als Handsender ausgebildet sein.

WO 01/86879 A1 betrifft ein Verfahren zur Steuerung und/oder zur Überwachung von Haushaltsgeräten mit einem lokalen Netz und einem globalen Netzwerk. Das Verfahren besteht darin, dass eine Anfrage Steuerung und/oder Überwachung der Geräte an eine im globalen Netzwerk integrierte Portal-Einheit übermittelt wird und dass nach Art der Anfrage Informationen über das zu steuernde bzw. zu überwachende Gerät einer im globalen Netzwerk integrierten Datenbank entnommen werden.

In der DE 103 15 831 A1 ist ein Haus-Netzwerk zur Übertragung von Steuerdaten für ein Hausautomationssystem beschrieben. Die bekannte technische Lehre besteht darin, unter Beibehaltung der Kabelführungsstruktur für die Stromvernetzung über zusätzliche Lichtquellenleiter eines Datenbusses alle in einem Haus denkbaren Vernetzungsprotokolle zusammenzufassen.

EP 1317099 A2 lehrt ein lokales Netzwerk und ein globales Netzwerk mit einem Mobiltelefon anzusteuern.

Der Erfindung liegt die Aufgabe zugrunde, eine Vorrichtung zur Steuerung von Gebäudetechniksystemen zu schaffen, die eine Fernsteuerung und/oder Fernwartung der Gebäudetechniksysteme ermöglicht.

Erfindungsgemäß wird diese Aufgabe durch eine Vorrichtung zur Steuerung von Gebäudetechniksystemen, insbesondere Sonnenschutzsystemen, Lichtsystemen, Schließsystemen und/oder Klimasystemen gelöst, welche mindestens eine Antriebseinheit für ein Gebäudetechniksystem, mindestens eine Sensoreinheit zur Bestimmung von Umgebungseinflüssen, eine elektronische Steuereinheit, welche mit den Antriebseinheiten und mit den Sensoreinheiten über eine Aktorschnittstelle verbunden ist, und eine mit der elektronischen Steuereinheit verbundene Datenbank zur Speicherung von Antriebsdaten aufweist, wobei die elektronische Steuereinheit eine Kommunikationsschnittstelle umfasst, die über ein Kommunikationsnetz, insbesondere über Internet oder Intranet, ansprechbar sowie zur graphischen Darstellung und zur manuellen Beeinflussung der Antriebsdaten der Datenbank ausgelegt ist.

Die Erfindung ermöglicht die Steuerung und Wartung von Gebäudetechniksystemen mittels der Kommunikationsschnittstelle sowohl über das Internet als auch über das Intranet und damit eine größtmögliche Mobilität beim Zugriff auf die Gebäudetechniksysteme. Auch eine Fehlerdiagnose und gegebenenfalls Fehlerbehandlung kann über das Internet bzw. Intranet erfolgen. Die Kommunikationsschnittstelle kann beispielsweise durch einen Web-Sever realisiert sein, der zusammen mit einem Servlet-Container und einer Java-Laufzeitumgebung auf der elektronischen Steuereineit (einem PC) installiert ist. Der PC muss außerdem über einen Internet Service/Access Provider im Internet erreichbar sein, falls der Zugang über das Internet erfolgen soll.

Die Erfindung betrifft alle Arten von Gebäudetechniksystemen. Unter Schließsystemen werden so z.B. diejenigen Systeme verstanden, die Türen, Tore, und/oder Fenster eines Gebäudes öffnen und/oder schließen, aber auch Systeme, die eine Überwachung des Öffnens oder Schließens bewerkstelligen und gegebenenfalls einen Alarm auslösen (Eskalationsmanagement).

In einer vorteilhaften Ausführungsform ist das Kommunikationsnetz ein globales Kommunikationsnetz, insbesondere das Internet. Hierdurch kann ein Zugriff auf die Gebäudetechniksysteme von einem beliebigen Ort erfolgen, an dem ein Internetzugang möglich ist.

In einer weiteren vorteilhaften Ausführungsform ist das Kommunikationsnetz ein lokales Kommunikationsnetz, insbesondere ein Intranet. Die Zugriffsmöglichkeit auf die Gebäudetechniksysteme ist hier auf einen lokalen Bereich beschränkt.

Die Aktorschnittstelle kann durch ein so genanntes Standard Motor Interface (SMI) gebildet werden, welches es erlaubt, von einem PC aus über kostengünstige drahtlose und/oder drahtgebundene Verbindungen mehrere Antriebseinheiten zu steuern und Daten von den Antriebseinheiten abzufragen.

Bei einer bevorzugten Ausführungsform führt die elektronische Steuereinheit die Steuerung der Antriebseinheiten aufgrund der in der Datenbank festgelegten Antriebsdaten automatisch durch, wobei die Steuerung insbesondere Tag/Nacht-Zyklen berücksichtigt. Die Steuerung der Gebäudetechniksysteme kann einem in der Datenbank geregelten Ablauf folgen. Dieser Ablauf kann über die Kommunikationsschnittstelle eingesehen und gegebenenfalls verändert werden.

Bei einer besonders bevorzugten Ausführungsform umfassen die Antriebsdaten der Datenbank Konfigurationsdaten, Protokolldaten einschließlich Historie aller Ereignisse, Parameterdaten und/oder Regeln.

Über die Aktorschnittstelle können bei der Initialisierung zunächst die Konfigurationsdaten, wie z.B. die Zahl der Antriebseinheiten und der Sensoreinheiten ermittelt werden. Diese Konfigurationsdaten werden durch Hinzufügen oder Entfernen von Datensätzen dynamisch an die Zahl der tatsächlich vorhandenen Antriebseinheiten bzw. Sensoreinheiten angepasst.

Parameterdaten geben die Eigenschaften der Antriebseinheiten und Sensoreinheiten wieder, bei den Antriebseinheiten insbesondere deren momentane Einstellung, aber auch Informationen über Schwellwerte, z.B. Endanschläge bei Motoren als Antriebseinheiten.

In den Protokolldaten werden die Einstellungen der Antriebseinheiten über ihre gesamte Lebensdauer gespeichert. Daneben wird das Auslösen von Ereignissen, z.B. die Durchführung von Kommandos zur Steuerung der Antriebseinheiten, in den Protokolldaten gespeichert. Dadurch wird der Wartungsfachmann in die Lage versetzt, alle Aktionen und Diagnosedaten einer bestimmten Antriebseinheit für einen definierten Zeitraum abzurufen.

Die räumliche Lage der Sensoreinheiten bezüglich der Antriebseinheiten kann in Verknüpfungsregeln berücksichtigt werden. Diese Regeln legen fest, welche Sensoreinheiten bei der Steuerung der Antriebseinheiten berücksichtigt werden sollen. Bei Verwendung von Sonnenschutzsystemen in Gebäuden kann es z.B. sinnvoll sein, wenn Daten, die von einer Sensoreinheit auf der Nordseite des Gebäudes gemessen werden, nicht für die Steuerung von Antriebseinheiten auf der Südseite des Gebäudes berücksichtigt werden. Weitere Regeln können Rekationen auf definierte Ereignisse festlegen, z.B. eine Veränderung der Stellung der Sonnenschutzsysteme, wenn die Parameterdaten der Sensoreinheiten vorgegebene Wertebereiche verlassen. Eine Regeländerung kann in der Datenbank zentral durchgeführt werden, sodass sich die Änderung sofort überall auswirkt.

Bei einer weiteren besonders bevorzugten Ausführungsform ist die Kommunikationsschnittstelle über einen mit dem externen Kommunikationsnetz verbundenen Personalcomputer, einen Personal Digital Assistant (PDA) und/oder ein WAP-Handy ansprechbar. Diese drei und weitere Endgeräte können über den Web-Browser angesprochen werden, verfügen aber vom Typ her über verschieden mächtige Darstellungs- und Interaktionsmöglichkeiten. Daher umfasst der Web-Browser jeweils eine auf das jeweilige Gerät zugeschnittene Webseite, die durch Eingabe einer passenden URL im Browser angesprochen werden kann. Die Endgeräte sind vorzugsweise mobil, sodass der Zugriff auf die Gebäudetechniksysteme nicht an einem festen Standort erfolgen muss. So kann der PC z.B. ein Labtop mit Internetzugang über WLAN sein.

Bei einer besonders bevorzugten Ausführungsform ist die Vorrichtung zum Versenden von Nachrichten über das Kommunikationsnetz in Abhängigkeit von den Antriebsdaten der Datenbank ausgelegt. Beim Eintreten von bestimmten Ereignissen, z.B. Überschreiten eines Schwellwertes, kann ein Alarm ausgelöst und eine Nachricht über das Kommunikationsnetz verschickt werden. Bei Verwendung eines Handys oder eines PDA kann es sich bei der Nachricht z.B. um eine SMS handeln, bei einem PC z.B. um eine e-mail.

Bei einer weiteren bevorzugten Ausführungsform ist mindestens eine Antriebseinheit als Jalousieantrieb, Fensterantrieb, Belüftungsantrieb, Garagentorantrieb oder Heizkörperantrieb ausgebildet. Die Aktorschnittstelle ist in der Lage, mehrere unterschiedliche Typen von Antriebseinheiten anzusprechen. Bei objektorientierter Programmierung der elektronischen Steuereinheit kann für jeweils einen Typ Antriebseinheit jeweils eine Klasse verwendet werden, wobei mehrere Antriebseinheiten eines Typs durch Instanzen der jeweiligen Klasse dargestellt werden.

In einer weiteren besonders bevorzugten Ausführungsform ist mindestens eine Sensoreinheit als Lichtsensor, Windsensor, Regensensor, Geräuschsensor, Glasbruchsensor, Schadstoffsensor, Temperatursensor oder Sonnenstandssensor ausgebildet und in der Nähe der Sonnenschutzsysteme angeordnet. Die von den Sensoreinheiten ermittelten Sensordaten werden direkt an die Antriebseinheiten übermittelt (eventing) und stehen daneben auch in der Datenbank zur Verfügung. Bei objektorientierter Programmierung der elektronischen Steuereinheit kann ebenso wie für die Antriebseinheiten für jeweils einen Typ Sensoreinheit jeweils eine Klasse verwendet werden, wobei mehrere Sensoreinheiten eines Typs durch Instanzen der jeweiligen Klasse dargestellt werden.

In einer besonders vorteilhaften Ausführungsform wird mindestens eine Sensoreinheit durch einen über das Kommunikationsnetz mit der Kommunikationsschnittstelle verbundenen Informationsserver, insbesondere eine Wetterstation, gebildet. Hierdurch können Informationen - über Wetterveränderungen gegebenenfalls schnell verfügbar gemacht und zur Steuerung der Antriebseinheiten verwendet werden.

Bei einer weiteren vorteilhaften Ausführungsform sind mindestens zwei Sensoreinheiten zur Messung derselben Umgebungseinflüsse vorgesehen. Durch die Verwendung redundanter Sensoreinheiten kann das Fehlerrisiko durch Fehlfunktionen von Sensoreinheiten reduziert werden.

Ein Ausführungsbeispiel der erfindungsgemäßen Vorrichtung ist in der schematischen Zeichnung dargestellt und wird in der nachfolgenden Beschreibung erläutert.

Es zeigt:
- **Figur**: eine schematische Darstellung einer Vorrichtung zur Steuerung von Gebäudetechniksystemen.

In der **Figur** ist eine Vorrichtung zur Steuerung von Gebäudetechniksystemen am Beispiel von Sonnenschutzsystemen gezeigt. Diese Vorrichtung umfasst drei Antriebseinheiten **1** für drei nicht bildlich dargestellte Sonnenschutzsysteme, z.B. Jalousien oder Rollos, sowie drei Sensoreinheiten **2** zur Messung von Umgebungseinflüssen wie Temperatur etc. Die Antriebseinheiten 1 und die Sensoreinheiten 2 sind mit einer zentralen elektronischen Steuereinheit **3** über eine Aktorschnittstelle **4** verbunden. Die elektronische Steuereinheit 3 steht mit einer Datenbank **5** in Verbindung, welche zur Speicherung von Antriebsdaten vorgesehen ist. Die elektronische Steuereinheit 3 weist eine Kommunikationsschnittstelle **6** auf, die über ein externes Kommunikationsnetz **7** (Internet) ansprechbar ist. Alternativ ist auch die Verwendung eines Intranets als Kommunikationsnetz möglich.

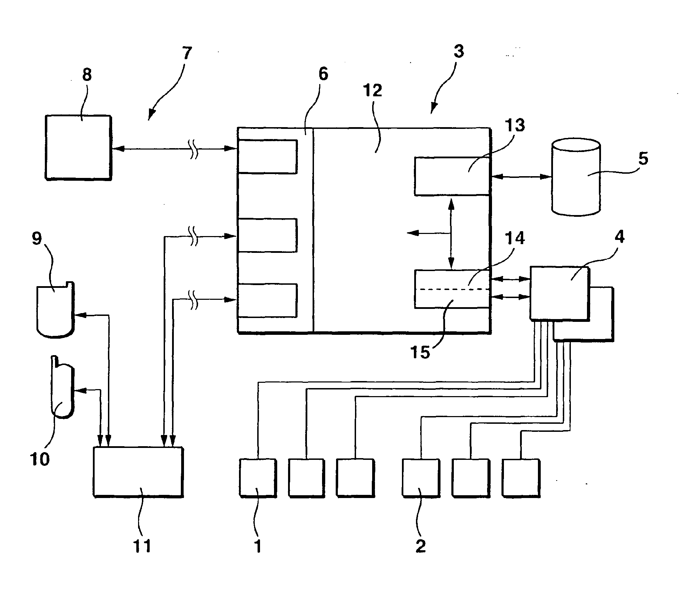

Als mobile Endgeräte können ein PC **8,** ein Personal Digital Assistant **9** (PDA) und ein WAP-Handy **10** mit dem Kommunikationsnetz 7 verbunden werden. Das WAP-Handy 10 und der PDA 9 stehen hierfür über ein WAP-Gateway **11** mit der Kommunikationsschnittstelle 6 in Verbindung. Die Kommunikationsschnittstelle 6 ist als Web-Server ausgebildet und sieht für jeden der Endgerätetypen jeweils eine Webseite vor, die in der Figur durch Rechtecke angedeutet sind. Die Vorrichtung ist in der Lage, Nachrichten, insbesondere e-mails, über das Kommunikationsnetz zu versenden, wenn Ereignisse eintreten, die eine schnelle Reaktion erfordern.

Die elektronische Steuereinheit 3 umfasst weiterhin einen Servlet-Container **12,** der ein Java-Servlet für das jeweilige Endgerät bereitstellt. Die Programmiersprache Java wird zur Realisierung der Softwarekomponenten der Vorrichtung verwendet, weil diese für Webanwendungen besonders geeignet und plattformunabhängig ist.

Die Steuereinheit 3 umfasst weiterhin eine JDBC-Schnittstelle **13** zur Ansteuerung der Datenbank 5, einen MotorBean **14** zur Ansteuerung der Aktorschnittstelle 4 und einen SensorBean **15** zur Erfassung von Umgebungseinflüssen und Übermittlung derselben an den MotorBean 14. Die JDBC-Schnittstelle 13 und der MotorBean 14 sowie der SensorBean 15 tauschen miteinander Daten aus und stellen diese dem jeweiligen Java-Sevelet zur Verfügung.

Über die mobilen Endgeräte 8, 9, 10 kann ein Anwender auf die Antriebsdaten der Datenbank 5 zugreifen, den Status der Antriebseinheiten 1 abfragen und diesen gegebenenfalls durch Absetzen von Kommandos verändern. Auch die Änderung von Parametern wie z.B. Schwellwerten in den Antriebsdaten der Datenbank 5 kann über die mobilen Endgeräte erfolgen. Zusätzlich kann über das Kommunikationsnetz 7 auch eine Fernwartung der Antriebseinheiten 1 durch einen Techniker vorgenommen werden. Hierbei können insbesondere Funktionsstörungen von Antriebseinheiten 1 oder Sensoreinheiten 2 aufgespürt und gegebenenfalls behoben werden. Durch den Zugriff auf die Sensordaten ist es überdies möglich, auf Veränderungen von Umgebungseinflüssen geeignet zu reagieren, beispielsweise indem bei zu starker Sonneneinstrahlung die Rollos herabgelassen werden, sofern dieses Verhalten nicht bereits durch eine entsprechende Regel in der Datenbank 5 vorgegeben ist.

## Patentansprüche

1. Vorrichtung zur Steuerung von Gebäudetechniksystemen, insbesondere Sonnenschutzsystemen, Lichtsystemen, Schließsystemen und/oder Klimasystemen, mit: mindestens einer Antriebseinheit (1) für ein Gebäudetechniksystem, mindestens einer Sensoreinheit (2) zur Bestimmung von Umgebungseinflüssen, einer elektronischen Steuereinheit (3), welche mit den Antriebseinheiten (1) und mit den Sensoreinheiten (2) über eine Aktorschnittstelle (4) verbunden ist, und einer mit der elektronischen Steuereinheit (3) verbundenen Datenbank (5) zur Speicherung von Antriebsdaten, wobei die elektronische Steuereinheit (3) eine Kommunikationsschnittstelle (6) umfasst, die über ein Kommunikationsnetz (7), insbesondere über Internet oder Intranet, ansprechbar sowie zur graphischen Darstellung und zur manuellen Beeinflussung der Antriebsdaten der Datenbank (5) ausgelegt ist.

2. Vorrichtung nach Anspruch 1, **dadurch gekennzeichnet, dass** das Kommunikationsnetz (7) ein globales Kommunikationsnetz, insbesondere das Internet ist.

3. Vorrichtung nach Anspruch 1 oder 2, **dadurch gekennzeichnet, dass** das Kommunikationsnetz ein lokales Kommunikationsnetz, insbesondere ein Intranet ist.

4. Vorrichtung nach einem der vorhergehenden Ansprüche, **dadurch gekennzeichnet, dass** die elektronische Steuereinheit (3) die Steuerung der Antriebseinheiten (1) aufgrund der in der Datenbank (5) festgelegten Antriebsdaten automatisch durchführt, wobei die Steuerung insbesondere Tag/Nacht-Zyklen berücksichtigt.

5. Vorrichtung nach Anspruch 1 oder 2, **dadurch gekennzeichnet, dass** die Antriebsdaten der Datenbank (5) Konfigurationsdaten, Protokolldaten einschließlich Historie aller Ereignisse, Parameterdaten und/oder Regeln umfassen.

6. Vorrichtung nach einem der vorhergehenden Ansprüche, **dadurch gekennzeichnet, dass** die Kommunikationsschnittstelle (6) über einen mit dem Kommunikationsnetz (7) verbundenen Personalcomputer (8), einen Personal Digital Assistant (9) und/oder ein WAP-Handy (10) ansprechbar ist.

7. Vorrichtung nach einem der vorhergehenden Ansprüche, **dadurch gekennzeichnet, dass** die Vorrichtung zum Versenden von Nachrichten über das Kommunikationsnetz (7) in Abhängigkeit von den Antriebsdaten der Datenbank (5) ausgelegt ist.

8. Vorrichtung nach einem der vorhergehenden Ansprüche, **dadurch gekennzeichnet, dass** mindestens eine Antriebseinheit (1) als Jalousieantrieb, Fensterantrieb, Belüftungsantrieb, Garagentorantrieb oder Heizkörperantrieb ausgebildet ist.

9. Vorrichtung nach einem der vorhergehenden Ansprüche, **dadurch gekennzeichnet, dass** mindestens eine Sensoreinheit (2) als Lichtsensor, Windsensor, Regensensor, Geräuschsensor, Glasbruchsensor, Schadstoffsensor, Temperatursensor oder Sonnenstandssensor ausgebildet und in der Nähe der Gebäudetechniksysteme angeordnet ist.

10. Vorrichtung nach einem der vorhergehenden Ansprüche, **dadurch gekennzeichnet, dass** mindestens eine Sensoreinheit durch einen über das Kommunikationsnetz (7) mit der Kommunikationsschnittstelle (6) verbundenen Informationsserver, insbesondere eine Wetterstation, gebildet wird.

11. Vorrichtung nach einem der vorhergehenden Ansprüche, **dadurch gekennzeichnet, dass** mindestens zwei Sensoreinheiten (2) zur Messung derselben Umgebungseinflüsse vorgesehen sind.

## Claims

1. Device for controlling building technology systems, in particular, sun shading systems, lighting systems, locking systems and/or air conditioning systems, comprising at least one drive unit (1) for a building technology system, at least one sensor unit (2) for determining environmental effects, an electronic control unit (3) which is connected to the drive units (1) and the sensor units (2) via an actor interface (4), and a database (5) which is connected to the electronic control unit (3) for storing drive data, wherein the electronic control unit (3) comprises a communication interface (6) which is responsive via a communications network (7), in particular, via the Internet or an Intranet, and is designed for graphic representation and manual control of the drive data of the database (5).

2. Device according to claim 1, **characterized in that** the communications network (7) is a global communications network, in particular, the Internet.

3. Device according to claim 1 or 2, **characterized in that** the communications network is a local communications network, in particular, an Intranet.

4. Device according to any one of the preceding claims, **characterized in that** the electronic control unit (3) performs automatic control of the drive units (1) based on the drive data defined in the database (5), wherein the control takes into consideration, in particular, day/night cycles.

5. Device according to claim 1 or 2, **characterized in that** the drive data of the database (5) comprise configuration data, protocol data including the history of all events, parameter data and/or rules.

6. Device according to any one of the preceding claims, **characterized in that** the communications interface (6) is responsive via a personal computer (8) which is connected to the communications network (7), a personal digital assistant (9) and/or a WAP mobile phone (10).

7. Device according to any one of the preceding claims, **characterized in that** the device for transmitting messages via the communications network (7) is designed in dependence on the drive data of the database (5).

8. Device according to any one of the preceding claims, **characterized in that** at least one drive unit (1) is designed as a drive for a blind, a window, ventilation, a garage door or a heating element.

9. Device according to any one of the preceding claims, **characterized in that** at least one sensor unit (2) is designed as a light sensor, a wind sensor, a rain sensor, a noise sensor, a glass breakage sensor, a pollution sensor, a temperature sensor or a sun position sensor, and is disposed in the vicinity of the building technology systems.

10. Device according to any one of the preceding claims, **characterized in that** at least one sensor unit is formed by an information server, in particular a weather station, which is connected to the communications interface (6) via the communications network (7).

11. Device according to any one of the preceding claims, **characterized in that** at least two senor units (2) are provided for measuring the same environmental effects.

## Revendications

1. Dispositif pour la commande de systèmes de gestion technique du bâtiment, en particulier de systèmes de protection solaire, de systèmes d'éclairage, de systèmes de verrouillage et/ou de systèmes de climatisation comprenant : au moins une unité d'entraînement (1) pour un système de gestion technique du bâtiment, au moins une unité de détection (2) pour la détermination d'influences environnementales, une unité de commande électronique (3) qui est reliée aux unités d'entraînement (1) et aux unités de détection (2) via une interface d'actionneurs (4) et une base de données (5) reliée à l'unité de commande électronique (3) pour la mémorisation de données d'entraînement, l'unité de commande électronique (3) comprenant une interface de communication (6) qui est accessible via un réseau de communication (7), en particulier via internet ou intranet, ainsi que conçue pour la représentation graphique et pour l'intervention manuelle sur les données d'entraînement de la base de données (5).

2. Dispositif selon la revendication 1, **caractérisé par le fait que** le réseau de communication (7) est un réseau de communication mondial, en particulier l'internet.

3. Dispositif selon la revendication 1 ou 2, **caractérisé par le fait que** le réseau de communication est un réseau de communication local, en particulier un intranet.

4. Dispositif selon l'une des revendications précédentes, **caractérisé par le fait que** l'unité de commande électronique (3) effectue automatiquement la commande des unités d'entraînement (1) sur la base des données d'entraînement spécifiées dans la base de données (5), la commande tenant compte en particulier des cycles jour/nuit.

5. Dispositif selon la revendication 1 ou 2, **caractérisé par le fait que** les données d'entraînement de la base de données (5) comprennent des données de configuration, des données de protocole y compris l'historique de tous les événements, des données de paramètres et/ou des règles.

6. Dispositif selon l'une des revendications précédentes, **caractérisé par le fait que** l'interface de communication (6) est accessible via un ordinateur personnel (8), un assistant numérique personnel (9) et/ou un téléphone portable WAP (10) relié au réseau de communication (7).

7. Dispositif selon l'une des revendications précédentes, **caractérisé par le fait que** le dispositif servant à l'envoi de messages via le réseau de communication (7) est conçu en fonction des données d'entraînement de la base de données (5).

8. Dispositif selon l'une des revendications précédentes, **caractérisé par le fait qu'**au moins une unité d'entraînement (1) est réalisée sous forme d'entraînement de store, d'entraînement de fenêtre, d'entraînement d'aération, d'entraînement de porte de garage ou d'entraînement de radiateur.

9. Dispositif selon l'une des revendications précédentes, **caractérisé par le fait qu'**au moins une unité de détection (2) est réalisée sous forme de capteur de luminosité, de capteur de vent, de capteur de pluie, de capteur de bruit, de capteur de bris de glace, de capteur de produit toxique, de capteur de température ou de capteur de hauteur du soleil et est disposée à proximité des systèmes de gestion technique du bâtiment.

10. Dispositif selon l'une des revendications précédentes, **caractérisé par le fait qu'**au moins une unité de détection est formée par un serveur d'informations, en particulier une station météorologique, relié à l'interface de communication (6) via le réseau de communication (7).

11. Dispositif selon l'une des revendications précédentes, **caractérisé par le fait qu'**au moins deux unités de détection (2) sont prévues pour la mesure des mêmes influences environnementales.
